# EUROPEAN PATENT APPLICATION

(11) **EP 4 848 062 A1**
(43) Date of publication of application: **02.12.2026**
(21) Application number: 25179093.7
(22) Date of filing: 27.05.2025
(51) Int. Cl.: G06F 3/12, B41J 3/62, B41J 11/00

(54) **A METHOD FOR A MULTI-LANE PRINTER**

(71) Applicant: Canon Production Printing Holding B.V., 5914 HH Venlo (NL)
(72) Inventor: GERRITS,Antonius M., Venlo (NL)
(74) Representative: Canon Production Printing IP Department

(57) **Abstract**

A printer comprising a user interface for interaction with a user of the printer, a print controller for controlling the print process for a digital image to be printed and a transport device comprising an endless transport belt supported on a pair of support rollers, which between them define a medium support plane, over which medium support plane a print station is provided, the transport device configured to transport in parallel lanes a plurality of individual print media which are left or right aligned in a lane, perpendicular to a scanning direction of the print station on the medium support plane. The print controller comprises a single print queue comprising print jobs for printing images on print media which print media are intended to be left aligned in a first lane group of the lanes and which are intended to be right aligned in a second lane group of the lanes. The print controller is configured to set the order of the print jobs to be printed by means of a first, second, third or fourth system setting.

## Description

### BACKGROUND OF THE INVENTION

### 1. Field of the invention

The present invention relates to a method for a printer comprising a user interface for interaction with a user of the printer, a print controller for controlling the print process for a digital image to be printed and a transport device comprising an endless transport belt supported on a pair of support rollers, which between them define a medium support plane, over which medium support plane a print station is provided, the transport device configured to transport in parallel lanes a plurality of individual print media which are fed into a plurality of lanes, perpendicular to a scanning direction of the print station on the medium support plane, wherein the print controller comprises a single print queue comprising print jobs for printing images on print media which print media are intended to be fed into the plurality of lanes, the method comprising the steps of printing a first print job (A) selected from the single print queue in at least one lane.

A left or right alignment of a print medium in a lane is determined by a viewing position of the operator towards a front of the printer, i.e. towards the front of the printer when feeding print media into the printer.

The invention may relate to a rigid printer or a large format hybrid printer which can print on rolls and on rigids.

A rigid print medium may also be called "rigid", "board" or "rigid board".

The print medium may also be called "print media" or "print media piece".

A guiding bar may also be called an alignment bar.

The term "don't care" as a value of alignment may be interpreted as an undetermined alignment, i.e. the alignment may be right or left.

### 2. Description of Background Art

Rigid printers are configured to print rigid substrates. Large format hybrid printers are configured to print both rigid substrates as well as flexible print media. Such a printer may comprise a transport device comprising an endless transport belt supported on at least one pair of support rollers, which between them define a medium support plane. Over the medium support plane a print station is provided. The print station generally comprises a printhead carriage translatable over the belt to print an image on a print medium on the belt in consecutive swaths. The print medium is moved in steps in between passes of the printhead carriage.

A large format hybrid printer is intended to be a productive engine capable of printing both on roll-2-roll media and on rigids. To be productive on rigids the printer is equipped with a multilane concept. With this, multiple rigids can be printed in parallel next to each other. The multilane concept increases productivity since there will be, per rigid, relatively less "turn time" for the print station compared to "jetting time".

In order to enhance an overall productivity and to reduce operator hassle the printer supports the feature of independent board feeding, i.e. the print medium does not need to be aligned in the transport direction. The print medium has to be placed against one of the guiding bars to achieve a fluent transport in an appropriate lane.

A problem arises when printing rigid jobs in different lanes in one print job queue in the most productive way, that the jobs later in the queue can become active. This is experienced to be confusing for users. A concept may be introduced to have a single queue where the job order is strictly sequential which is less productive. Another concept may be introduced to have a two queue view where the job order is sequential within each queue with the difficulty of needing algorithms in where jobs end up, i.e. in which queue, when switching from a one-queue mode to a two-queue mode or vice versa.

### SUMMARY OF THE INVENTION

It is an object of the invention to provide a productive printer with an improved ease of use of the lanes.

In accordance with the present invention, a method for printing according to claim 1 is provided. For each second print job (N) in the single print queue after the first print job (A), at least one of the following checks is carried out:
b1) a first check if a same print media is specified for the second print job (N) as for the first print job (A),
b2) a second check if a same media print mode is specified for the second print job (N) as for the first print job (A),
b3) a third check if the second print job (N) is adjacent to the first print job (A),
b4) a fourth check if a lane type specified to be used by the second print job (N) is different from a lane type specified to be used by the first print job (A).

If the checking is positive, i.e. if all selected checks are positive, printing the second print job (N) will start parallel to the first print job (A) in a lane having the lane type specified to be used by the second print job (N). The checks b1), b2) and b3) are optional, while check b4) is an essential feature of the method according to the present invention.

The present invention uses a specific job scheduling algorithm that allows parallel printing in different lanes types without leading to confusion. For example, simplex and duplex printing of rigids in a rigid printer without leading to confusion for the operator is made possible. The algorithm distinguishes between jobs that can print on all lanes (DC, i.e. Don't Care), only right-aligned lanes (RA), or only left-aligned lanes (LA). To prevent that jobs overhaul each other in a queue or that jobs further down the queue suddenly start printing when are still out-of-sight in the current in the user interface view - which is confusing for users - it is allowed to start a second job in the system while the previous one does not use a certain number of lanes. Another option is that another job may already start printing provided both jobs have no overlapping lane needs. A further possibility has the extra precondition needed that the second job must be adjacent to the printing job in order to allow start of printing. Each further option provides less overall productivity but in contrast has less risk of confusion for the user because jobs lower in the queue will suddenly start requesting for rigids. An extra item that can be taken into account in the algorithm if there are media changes or media print mode changes between the jobs. If media changes between jobs in the queue are not allowed or need a significant amount of switching time it gives again less productivity but also less confusion. If media print mode changes - on top of media changes - are not allowed then it is prevented that jobs do start simultaneously but it does not lead to extra productivity as two different modes cannot be handled simultaneously by the printer. It does however give the advantage that one can achieve a faster production of an end product that is produced via the different lanes. For example, by allowing different print modes for a backside of a board, the operator can choose to feed the backside of the board to the printer such that in an earlier stage boards are produced which have been printed on the frontside as well on the backside.

By doing so, a check is performed on a non-common lane set or even disjunct lane set. And also a check may be performed on a level of adjacency of jobs in the queue to a currently printing job.

According to an embodiment an adjacency according to the third check b3) is predetermined by a positive integer value M of a system setting of the printer, wherein the positive integer value M determines that the second print job (N) has a distance in the single print queue of a number of places equal to or less than M to the first print job (A).

According to an embodiment the lane type determines a left alignment of the print media or a right alignment of the print media.

According to an embodiment each lane has its own lane type.

According to an embodiment the fourth check checks if the lane types specified to be used by the second print job (N) are disjunct from the lane types specified to be used by the first print job (A).

The present invention also relates to a printer comprising a user interface for interaction with a user of the printer, a print controller for controlling the print process for a digital image to be printed and a transport device comprising an endless transport belt supported on a pair of support rollers, which between them define a medium support plane, over which medium support plane a print station is provided, the transport device configured to transport in parallel lanes a plurality of individual print media which are fed into a plurality of lanes, perpendicular to a scanning direction of the print station on the medium support plane, wherein the print controller comprises a single print queue comprising print jobs for printing images on print media which print media are intended to be fed into the plurality of lanes, wherein the print controller is configured to perform the steps of the method according to the present invention.

The present invention also relates to a software product comprising program code on a machine-readable medium, which program code, when loaded into a print controller of a digital printer according to the present invention, causes the print controller to execute the steps of the method according to the present invention.

Further scope of applicability of the present invention will become apparent from the detailed description given hereinafter. However, it should be understood that the detailed description and specific examples, while indicating preferred embodiments of the present invention, are given by way of illustration only, since various changes and modifications within the scope of the present invention will become apparent to those skilled in the art from this detailed description.
Fig. 1 is a schematic perspective view of a printing system configured to print on rigids according to the present invention;
Fig. 2 is a schematic perspective view of a hybrid printing system configured to print on rolls according to the present invention;
Fig. 3 is a schematic diagram of a control unit of a printer according to Fig. 1;
Fig. 4 is a schematic view of the media support plane of the printer according to Fig. 1;
Fig. 5 is a flow diagram illustrating the steps of a method according to the present invention; and
Fig. 6 is a diagram of a software product according to the present invention.

### DETAILED DESCRIPTION OF THE PREFERRED EMBODIMENTS

The present invention will now be described with reference to the accompanying drawings, wherein the same reference numerals have been used to identify the same or similar elements throughout the several views.

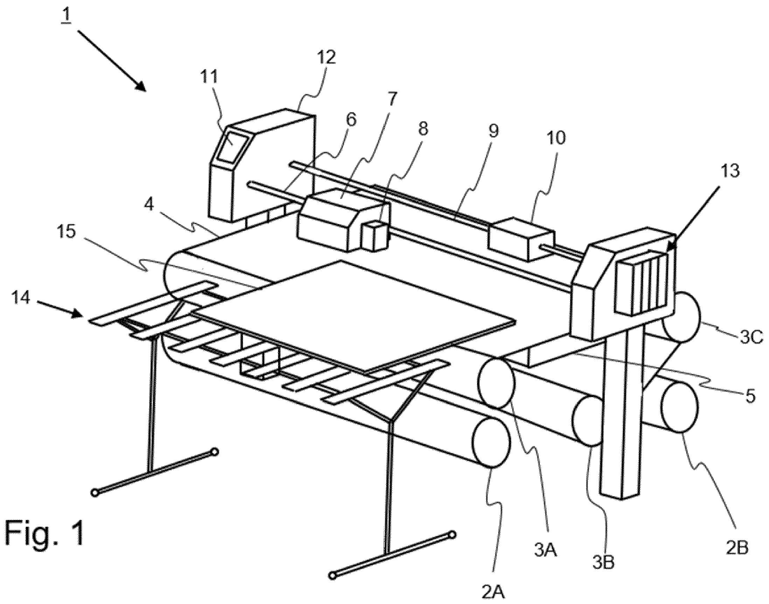

Fig. 1 shows an example of a wide format inkjet printer 1 suitable for applying the method according to the present invention. The wide-format printer 1 comprises an inkjet printing assembly 7 for printing on a print medium 15. The print medium 15 in Fig. 1 is a relatively rigid substrate, such as a panel. The print medium 15 is supplied from a media input unit 14, which may be configured for storing a plurality of such print media 15 and supplying these to the printer 1. The printer 1 comprises transport means for receiving and transporting the print medium 15 along the inkjet printing assembly 7. In Fig. 1, the transport means comprise an endless transport belt 4 supported on a plurality of support rollers 3A, 3B, 3C. At least one of the support rollers 3A, 3B, 3C is provided with driving means for moving the belt 4. Additionally, one or more one of the support rollers 3A, 3B, 3C may be configured to be moved and/or tilted to adjust and control the lateral position of the belt 4. The printer 1 is provided with at least one sensor or detector, such as a CCD camera or area camera, to determine the relative position of belt 4 and/or the print medium 15. Data from said at least one sensor or detector may be applied to control the position of the belt 4 and/or the print medium 15. The at least one sensor or detector is positioned in or at a housing (not shown) of the printer 1 and is configured to detect the print medium 15 before transporting the print medium 15 or before the print medium reaches the print station 7. By using cameras the print medium 15 can be detected over a full width of the medium support plane, and before the print station 7 will start printing on the print medium 15. The at least one sensor or detector can also sense or see alignment bars (not shown) positioned on the media input unit 14 extending towards the medium support plane. According to an alternative embodiment the at least one sensor or detector is integrated in the medium support plane.

The belt 4 is further provided with through-holes and a suction box 5 in connection with a suction source (not shown), such that a negative pressure may be applied to the print medium 15 via the through-holes in the belt 4. The negative pressure adheres the print medium 15 flatly to the belt 4 and prevents displacement of the print medium 15 with respect to the belt 4. Due to this holding the belt 4 is able to transport the print medium 15. It will be appreciated that other suitable transport means, such as rollers, steppers, etc., may alternatively be applied. The print medium 15 may be transported stepwise and/or in continuous movement.

The inkjet printing assembly 7 is configured to translate along a first guide beam 6 in a scanning direction. The scanning direction is perpendicular to the direction in which the print medium is transported by the belt 4. The inkjet printing assembly 7 holds a plurality of print heads (not shown), which are configured to jet a plurality of different marking materials (different colours of ink, primers, coatings, etc.) on the print medium 15. Each marking material for use in the printing assembly 7 is stored in one of a plurality of containers arranged in fluid connection with the respective print heads for supplying marking material to said print heads to print an image on the print medium 15.

The ejection of the marking material from the print heads is performed in accordance with data provided in the respective print jobs. The timing by which the droplets of marking material are released from the print heads determines their position on the print medium 15. The timing may be adjusted based on the position of the inkjet printing assembly 7 along the first guide beam 6. The above mentioned sensor 8 may therein be applied to determine the relative position and/or velocity of the inkjet printing assembly 7 with respect to the print medium 15. Based upon data from the sensor 8, the release timing of the marking material may be adjusted.

The marking materials may require treatment to properly fixate them on the print medium. Thereto, a fixation unit 10 is provided downstream of the inkjet printing assembly 7. The fixation unit 10 may emit heat and/or radiation to facilitate the marking material fixation process. In the example of Fig. 1, the fixation unit 10 is a radiation emitter, which emits light of certain frequencies, which interacts with the marking materials, for example UV light in case of UV-curable inks. The fixation unit 10 in Fig. 1 is translatable along a second guide beam 9. Other fixation units 10, such as page-wide curing or drying stations may also be applied. Further, the inkjet printing assembly 7 may be provided with a further fixation unit on the same carriage which holds the print heads. This further fixation unit can be used to (partially) cure and/or harden the marking materials, independent of or interaction with the fixation unit 10.

After printing, and optionally fixation, the print medium 15 is transported to a receiving unit (not shown). The receiving unit may comprise a take-up roller for winding up the print medium 15, a receiving tray for supporting sheets of print medium 15, or a rigid media handler, similar to the media input unit 14. Optionally, the receiving unit may comprise processing means for processing the medium 15 after printing, e.g. a posttreatment device such as a coater, a folder, a cutter, or a puncher.

The wide-format printer 1 furthermore comprises a user interface 11 for receiving print jobs and optionally for manipulating print jobs. The local user interface unit 11 is integrated to the print engine and may comprise a display unit and a control panel. Also the user interface may be run in a browser on a independent tablet and connected via e.g. WiFi to the printer. Alternatively, the control panel may be integrated in the display unit, for example in the form of a touch-screen control panel. The local user interface unit 11 is connected to a control unit 12 connected to the printer 1. The control unit 12, for example a computer, comprises a processor adapted to issue commands to the printer 1, for example for controlling the print process. The control unit 12 is also to an embedded controller (not shown) which receives signals from sensors in the printer 1 and issues signals to the electronic components of the printer 1, for example electronics due to the plurality of lanes of the printer 1. The printer 1 may optionally be connected to a network. The connection to the network can be via cable or wireless. The printer 1 may receive printing jobs via the network. Further, optionally, the control unit 12 of the printer 1 may be provided with an input port, such as a USB port, so printing jobs may be sent to the printer 1 via this input port.

The printer 1 in Fig. 1 is a so-called hybrid printer, capable of handling both flexible media and rigid substrates. However, the invention is also applicable in a printer which is a rigid only printer.

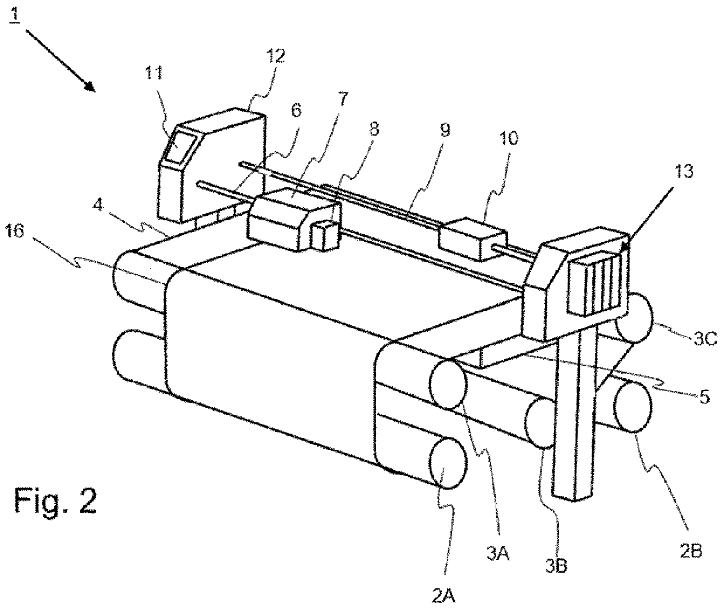

In Fig. 1, the printer 1 operates in a first print situation, wherein the printer 1 is configured for transporting rigid substrates, such as the print medium 15. Such rigid print media 15 may be panels for doors, walls, etc., corrugated media, plates formed of plastic or metal, etc. To handle these rigid print media 15, the printer 1 in Fig. 1 is configured with a substantially linear transport path: from the media input device 14, the print medium 15 moves forward along the inkjet printing assembly 7 at a at substantially constant height. The media input unit 14 and the receiving unit are positioned at the level of the medium support surface of the belt 4. In Fig. 2, a flexible web medium 16 is supplied to the printer 1, which web medium 16 may be composed of e.g. paper, label stock, coated paper, plastic or textile. The web medium 16 is supplied from the input roller 2A and extends across the belt 4 to the take-up roller 2B, where the web medium 16 is re-wound. The printer 1 is configured to swiftly and efficiently switch between print modes.

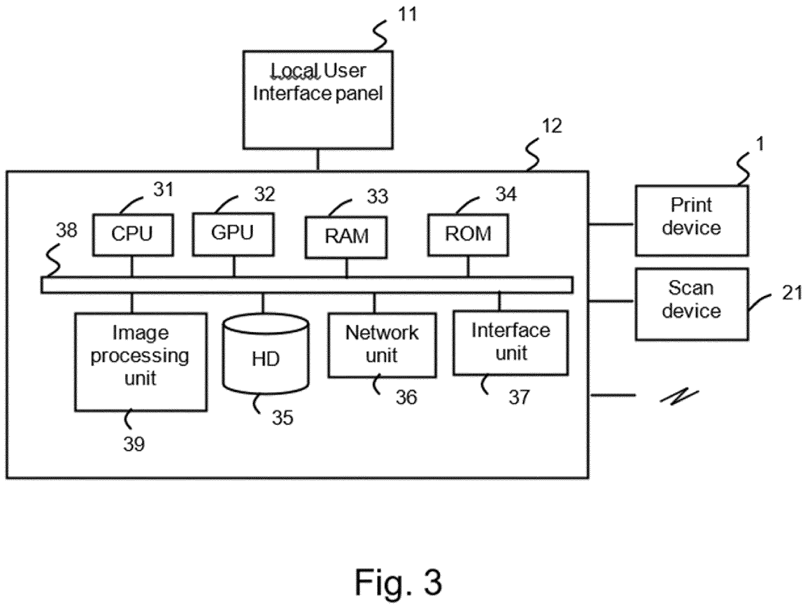

An embodiment of the control unit 12 is in more detail presented in Fig. 3. As shown in Fig. 3, the control unit 12 comprises a Central Processing Unit (CPU) 31, a Graphical Processor Unit (GPU) 32, a Random Access Memory (RAM) 33, a Read Only Memory (ROM) 34, a network unit 36, an interface unit 37, a hard disk (HD) 35 and optionally an image processing unit 39 such as a Raster Image Processor (RIP). The aforementioned units 31 - 37 are interconnected through a bus system 38. However, the control unit 12 may also be a distributed control unit.

The CPU 31 controls the printing system 1 in accordance with control programs stored

in the ROM 34 or on the HD 35 and the local user interface panel 11. The CPU 31 also controls the image processing unit 39 and the GPU 32. The ROM 34 stores programs and data such as boot program, set-up program, various set-up data or the like, which are to be read out and executed by the CPU 31. The hard disk 35 is an example of a non-volatile storage unit for storing and saving programs and data which make the CPU 31 execute a print process to be described later. The hard disk 35 also comprises an area for saving the data of externally submitted print jobs. The programs and data on the HD 35 are read out onto the RAM 33 by the CPU 31 as needed. The RAM 33 has an area for temporarily storing the programs and data read out from the ROM 34 and HD 35 by the CPU 31, and a work area which is used by the CPU 31 to execute various processes. The interface unit 37 may connect the control unit 12 to a scan device 21 for scanning documents to be printed and to the printing system 1. The network unit 36 connects the control unit 12 to the network N and is designed to provide communication with workstations and with other devices reachable via the network N. The image processing unit 39 may be implemented as a software component running on an operation system of the control unit 12 or as a firmware program, for example embodied in a field-programmable gate array (FPGA) or an application-specific integrated circuit (ASIC). The image processing unit 39 has functions for reading, interpreting and rasterizing the print job data. Said print job data contains image data to be printed (i.e. fonts and graphics that describe the content of the document to be printed, described in a Page Description Language or the like), image processing attributes and print settings. The control unit 12 is connected to an embedded controller for receiving signals from sensors in the printer 1 and issuing signals to the plurality of components of the printer 1.

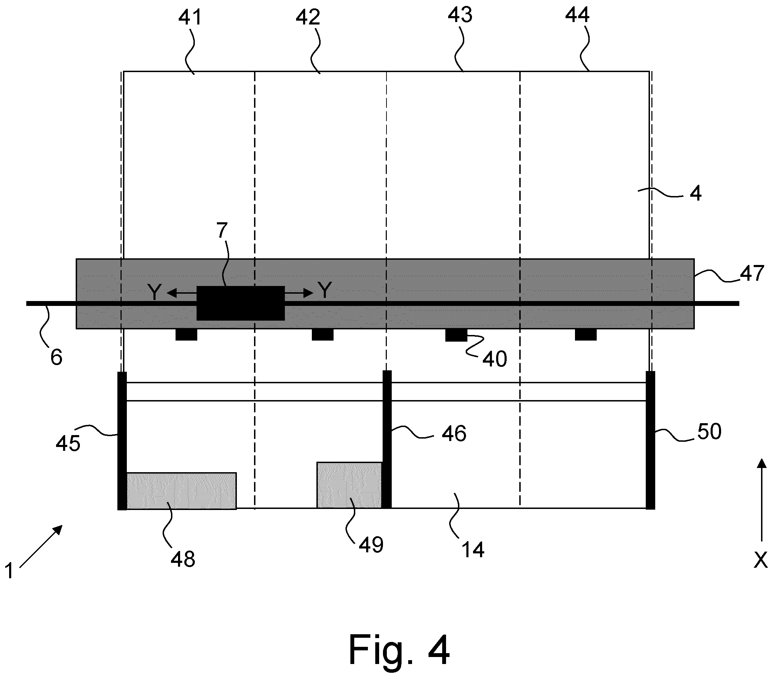

Fig. 4 shows schematically the printer 1 seen from above provided with a multi-lane concept. The belt 4 is divided into lanes 41, 42, 43, 44 which are parallel in the transport direction X of the print media on the media input unit 14 and the belt 4. In parallel a plurality of individual print media may be transported perpendicular to a scanning direction Y of the print station 7 of the printer 1. The print media may have different dimensions. Positions of each individual print medium is determined. A designated image specific for each print medium is jetted on each respective print medium. The above steps are repeated such that print media are printed in parallel lanes 41, 42, 43, 44 perpendicular to the scanning direction Y.

In this example, four lanes 41, 42, 43, 44 are depicted. However, according to the invention the number of lanes may be in principle two or more lanes.

The position and the widths of the lanes 41, 42, 43, 44 on the belt 4 and the media input unit 14 may be configurable via the user interface 11. Such a configuration is determined by the positions of one or more guiding bars 45, 46, 50. In another embodiment the position and the widths of the lanes 41, 42, 43, 44 on the belt 4 and the media input unit 14 is determined just by the placing of guiding bars 45, 46, 50. The user interface then reflects that a change of the placing of the guiding bars 45, 46, 50.

The lanes 41, 42, 43, 44 are completely or partially bound by the guiding bars 45, 46, 50 extending on the media input unit 14 towards the belt 4 in the transport direction X of the belt 4.

The print media may be aligned by means of the guiding bars 45, 46, 50. A print media piece may be left aligned or right aligned. For example print media piece 48 is left aligned along guiding bar 45 and print media piece 49 is right aligned along guiding bar 46. The print media may have different sizes, i.e. different lengths and/or widths.

A housing 47 above the belt 4 comprises a guiding rail 6 via which the print station 7 is able to travel in the scanning direction Y. The housing 47 also comprises one or more sensors (not shown) which are substantially downward directed to the belt 4 for detecting a presence and a position of print media in the lanes 41 - 44. The housing 47 also comprises signalling objects 40 at the front side directed to the media input unit 14 for signalling if a lane is disabled or enabled or if a lane is available to receive print media to print the images of the current print job. A signalling object 40 is positioned above each of the defined lanes 41 - 44.

The planning of feeding of a print medium in the printer may be automatically determined by the method according to the present invention from the print jobs present in the single print queue of the printer 1, where each print job indicates sizes of the at least one image to be printed on the print media. Each print job also specifies a lane type, for example a left alignment or a right alignment or an undefined alignment. The print controller 12 keeps track of the completed images, the currently being printed images and the images to be scheduled for printing.

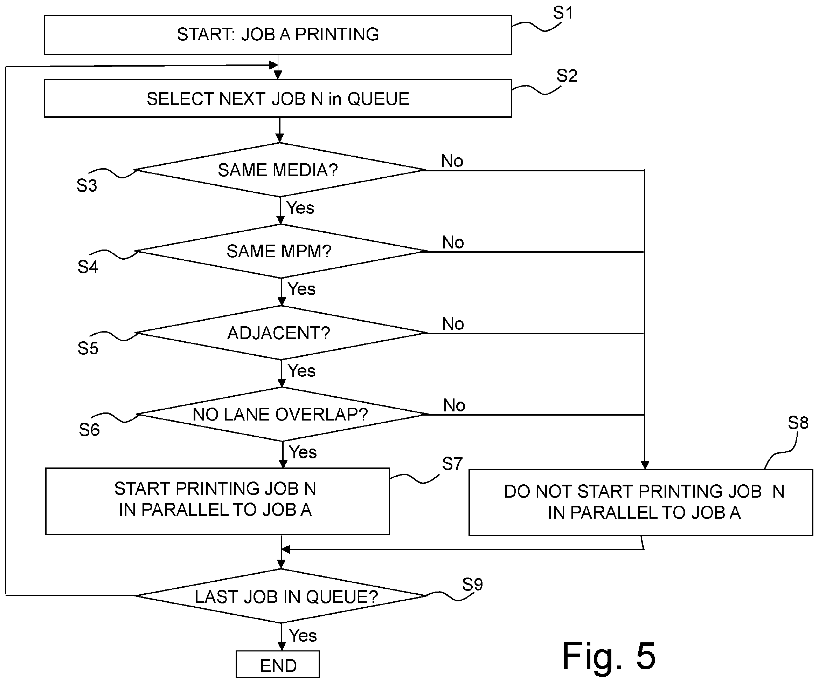

Fig. 5 describes an example of a method for keeping an order of printing print jobs on a printer according to the present invention. The method starts in a first step S1 when print job A is printing in a number of lanes of the printer. The steps S1 - S9 of the method in Fig. 5 are reprocessed whenever a print job has finished printing or other changes in the print job queue occur like adding, moving, replacing or removing a print job in the print job queue. Another change may be splitting or combining of print jobs. Another change may be when a print job is edited and different media and/or media print modes are set or when alignment settings are changed of at least a print job in the queue.

In a second step S2 the next print job N in the print queue is selected.

In an optional third step S3 it is checked if the print media of the print job N is the same as the print media of the print job A. If the check is positive, the method proceeds to an optional fourth step S4. Otherwise the method proceeds to an eighth step S8.

In the optional fourth step S4 it is checked if the media print mode of the print job N is the same as the media print mode of the print job A. If the check is positive, the method proceeds to an optional fifth step S5. Otherwise the method proceeds to the eighth step S8.

In the optional fifth step S5 it is checked if the print job N is adjacent to the print job A. If the check is positive, the method proceeds to a sixth step S6. Otherwise the method proceeds to the eighth step S8.

In the sixth step S6 it is checked if the print job N uses different lanes than print job A, or alternatively - more strictly - it is checked if print job N has no overlapping lanes with print job A. If the check is positive, the method proceeds to a seventh step S7. Otherwise the method proceeds to the eighth step S8.

In the seventh step S7 printing of print job N is started in parallel to print job A. The method proceeds to a ninth step S9.

In the eighth step S8 printing of print job N is not started in parallel to print job A. The method proceeds to a ninth step S9.

In the ninth step S9 it is checked if print job N is the last print job in the print job queue. If so, the method ends in an end point (END). Otherwise, the method returns to the second step S2.

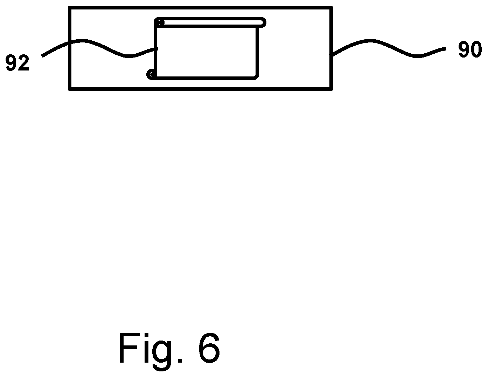

Fig. 6 schematically shows a non-transitory software medium 90 according to the invention. The software medium 90 comprises executable code 92 configured to, when executed, perform the method according to the invention, e.g. as described with respect to either the printing system 1 shown in Fig. 1 or the method of controlling the printing system 1 according to the present invention and/or according to any of the variants and modifications of the printing system 1 and/or of the method described herein.

The non-transitory software medium 90 may, specifically, be formed as a CD or a CD-ROM, a DVD or a DVD-ROM, a BluRay disc or a BluRay-ROM disc, a magnetic hard drive, a solid state disk (SSD) hard drive, a USB memory device, a storage area in a cloud environment, and so on.

Although specific embodiments of the invention are illustrated and described herein, it will be appreciated by those of ordinary skill in the art that a variety of alternate and/or equivalent implementations exist. It should be appreciated that the exemplary embodiment or exemplary embodiments are examples only and are not intended to limit the scope, applicability, or configuration in any way. Rather, the foregoing summary and detailed description will provide those skilled in the art with a convenient road map for implementing at least one exemplary embodiment, it being understood that various changes may be made in the function and arrangement of elements described in an exemplary embodiment without departing from the scope as set forth in the appended claims and their legal equivalents. Generally, this application is intended to cover any adaptations or variations of the specific embodiments discussed herein.

It will also be appreciated that in this document the terms "comprise", "comprising", "include", "including", "contain", "containing", "have", "having", and any variations thereof, are intended to be understood in an inclusive (i.e. non-exclusive) sense, such that the process, method, device, apparatus or system described herein is not limited to those features or parts or elements or steps recited but may include other elements, features, parts or steps not expressly listed or inherent to such process, method, article, or apparatus. Furthermore, the terms "a" and "an" used herein are intended to be understood as meaning one or more unless explicitly stated otherwise. Moreover, the terms "first", "second", "third", etc. are used merely as labels, and are not intended to impose numerical requirements on or to establish a certain ranking of importance of their objects.

The present invention being thus described, it will be obvious that the same may be varied in many ways. Such variations are not to be regarded as a departure from the spirit and scope of the present invention, and all such modifications as would be obvious to one skilled in the art are intended to be included within the scope of the following claims.

## Claims

1. A method for a printer (1) comprising a user interface for interaction with a user of the printer (1), a print controller (12) for controlling the print process for a digital image to be printed and a transport device comprising an endless transport belt (4, 104) supported on a pair of support rollers (3A, 3B, 3C), which between them define a medium support plane, over which medium support plane a print station (7) is provided, the transport device configured to transport in parallel lanes a plurality of individual print media which are fed into a plurality of lanes, perpendicular to a scanning direction of the print station (7) on the medium support plane, wherein the print controller (12) comprises a single print queue comprising print jobs for printing images on print media which print media are intended to be fed into the plurality of lanes, the method comprising the steps of
a) printing a first print job (A) selected from the single print queue in at least one lane, and
b) for each second print job (N) in the single print queue after the first print job (A), checking at least one of the checks out of
b1) a first check if a same print media is specified for the second print job (N) as for the first print job (A),
b2) a second check if a same media print mode is specified for the second print job (N) as for the first print job (A),
b3) a third check if the second print job (N) is adjacent to the first print job (A),
b4) a fourth check if a lane type specified to be used by the second print job (N) is different from a lane type specified to be used by the first print job (A), and
c) if the checking in the step b) is positive, starting printing the second print job (N) parallel to the first print job (A) in a lane having the lane type specified to be used by the second print job (N).

2. A method according to claim 1, wherein an adjacency according to the third check b3) is predetermined by a positive integer value M of a system setting of the printer, wherein the positive integer value M determines that the second print job (N) has a distance in the single print queue of a number of places equal to or less than M to the first print job (A).

3. A method according to claim 1 or 2, wherein the lane type determines a left alignment of the print media or a right alignment of the print media.

4. A method according to claim 1 or 2, wherein each lane has its own lane type.

5. A method according to any of the preceding claims, wherein the fourth check checks if the lane types specified to be used by the second print job (N) are disjunct from the lane types specified to be used by the first print job (A).

6. A printer (1) comprising a user interface for interaction with a user of the printer (1), a print controller (12) for controlling the print process for a digital image to be printed and a transport device comprising an endless transport belt (4, 104) supported on a pair of support rollers (3A, 3B, 3C), which between them define a medium support plane, over which medium support plane a print station (7) is provided, the transport device configured to transport in parallel lanes a plurality of individual print media which are fed into a plurality of lanes, perpendicular to a scanning direction of the print station (7) on the medium support plane, wherein the print controller (12) comprises a single print queue comprising print jobs for printing images on print media which print media are intended to be fed into the plurality of lanes, wherein the print controller is configured to perform the steps of the method according to any of the preceding claims.

7. A software product comprising program code on a machine-readable medium, which program code, when loaded into a print controller (12) of a digital printer according to claim 6, causes the print controller (12) to execute the steps of the method according to any of the claims 1 - 5.
